# EUROPEAN PATENT APPLICATION

(11) **EP 4 813 576 A2**
(43) Date of publication of application: **30.09.2026**
(21) Application number: 26183207.5
(22) Date of filing: 17.06.2024
(51) Int. Cl.: B25D 11/06

(54) **AN ELECTRIC PERCUSSION DEVICE AND A METHOD FOR CONTROLLING THE SAME**

(30) Priority: 05.07.2023 FI 20235793
(62) Document number(s) of the earlier application(s) in accordance with Art. 76 EPC: 24733604.3 / 4 739 463
(71) Applicant: Lekatech Oy, 47400 Kausala (FI)
(72) Inventor: PELTOLA, Jyri, 47400 KAUSALA (FI); PELTOLA, Tuomo, 47400 KAUSALA (FI)
(74) Representative: Väänänen, Janne Kalervo

(57) **Abstract**

An electric percussion device (100) comprises a frame (101), an actuator member (103) linearly movable with respect to the frame, and a linear electric machine (104) comprising a mover (105) for directing impacts to the actuator member and a stator (106) having windings for generating a magnetic force directed to the mover when electric currents are supplied to the windings. The electric percussion device comprises a sensor system (107) for detecting situations where the mover passes a control limit position with respect to the frame. The electric percussion device comprises a controller (108) configured to control the linear electric machine to decrease the magnetic force directed to the mover in response to a situation in which a predetermined time has elapsed after the mover has passed the control limit position when moving towards the actuator member. Thus unwanted current peaks can be avoided when the mover hits the actuator member.

## Description

### Field of the disclosure

The disclosure relates to an electric percussion device, such as an electric hammer device, with a linear electric machine, that is connectable to an excavator or a to working machine of another kind. Furthermore, the disclosure relates to a method for controlling an electric percussion device.

### Background

Typically, a percussion device is used as an attachment to an excavator or another working machine where the intention is to break up for example stone, concrete, or some other material. The percussion device can be attached e.g. to the boom of an excavator, in place of a bucket. The percussion device incorporates a mechanism configured to direct impacts to an actuator member, e.g. a chisel, whose end forms a tip which transmits the impacts to material to be broken up. At the same time as the impacts are directed to the actuator member, the percussion device is pushed against the material to be broken up. Thus, the above-mentioned tip penetrates, due to the impacts and the pushing, into the material to be broken up, and, consequently, breaks up the material.

The mechanism to direct impacts to the actuator member is typically hydraulic, but recently also electric mechanisms based on linear electric machines are becoming more common because hydraulic mechanisms have their own challenges. One of the challenges encountered with hydraulic percussion devices is their tendency to cause pressure shocks which can be destructive to the hydraulic system of a working machine. These pressure shocks can be smoothed, but to some extent only, by means of a pressure accumulator. Another challenge of a hydraulic percussion device is that it has a relatively high power consumption. The hydraulic system contains, in the energy flow direction, a plurality of energy-loss producing elements one after another, causing a reduction of the efficiency of the whole system. The energy-loss producing elements include, for instance, an engine that drives a hydraulic pump, the hydraulic pump, and a piping and valve system that produces a flow resistance. Heating up of the hydraulic oil in the hydraulic percussion device may also pose its own challenges to the hydraulic system of the working machine.

On the other hand, an electric percussion device, such as a hammer or a rock drill, is not free from challenges either. One of the challenges is related to a control of a linear electric machine. For example, back-and-forth oscillations of a mover of a linear electric machine which may occur after the mover has directed an impact to the actuator member, e.g. a chisel, typically increase a time needed between successive impacts directed to the actuator member and thereby reduce a stroke frequency of the electric percussion device. The stroke frequency, in turn, is proportional to the efficiency of the electric percussion device to e.g. break up material. Furthermore, control methods which are commonly used in conjunction with hydraulic percussion devices are not, as such, applicable in conjunction with electric percussion devices.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new electric percussion device, e.g. an electric hammer device, an electric rock drill device, or an electric impact hammer for piling.

An electric percussion device according to the invention comprises:
- a frame attachable to a working machine such as an excavator, the frame comprising attachment members configured to attach to the working machine so that the frame is nondestructively detachable from the working machine,
- an actuator member, e.g. a chisel, linearly movably supported with respect to the frame,
- a linear electric machine comprising a mover configured to direct impacts to the actuator member and a stator attached to the frame and provided with windings configured to generate a magnetic force directed to the mover in response to electric current supplied to the windings,
- a sensor system configured to detect situations in which the mover passes a control limit position with respect to the frame, and
- a controller configured to control the linear electric machine to decrease the magnetic force directed to the mover of the linear electric machine in response to a situation in which a first predetermined time has elapsed after the mover has passed the control limit position when moving in a first direction towards the actuator member.

Furthermore, the controller is configured to activate the linear electric machine to generate the magnetic force tending to move the mover in a second direction away from the actuator member in response to a situation in which a second predetermined time has elapsed after the mover passed the control limit position when moving in the first direction, the second predetermined time being longer than the first predetermined time.

Depending on the control limit position, the first predetermined time can be zero or a time that is shorter than a time that is needed by the mover to move from the control limit position to a position at which the mover hits the actuator member.

The linear electric machine can be controlled to decrease the magnetic force directed to the mover for example by deactivating the linear electric machine or by limiting stator currents of the linear electric machine. As the linear electric machine is controlled to decrease the magnetic force prior to the mover impacts the actuator member and thereby the speed of the mover may change rapidly, unwanted transient peaks in the stator currents can be avoided. For example, in conjunction with a linear induction machine, a situation where a moving direction of the mover changes rapidly may correspond to a short circuit situation from the viewpoint of the stator and thus high transient peaks in the stator currents might occur. For another example, in conjunction with a permanent magnet machine, a situation where a moving direction of the mover changes rapidly represents a strong asynchronous situation in which high transient peaks in the stator currents might occur. The unwanted transient peaks in the stator currents would stress a power electronic system supplying the linear electric machine and may complicate the control of the linear electric machine. Thus, it is advantageous that transient peaks of kind mentioned above can be avoided or at least reduced.

As mentioned above, the controller is configured to activate the linear electric machine to generate the magnetic force tending to move the mover away from the actuator member, i.e. in the second direction, in response to a situation in which the above-mentioned second predetermined time has elapsed after the mover has passed the control limit position when moving towards the actuator member. The second predetermined time is longer than the above-mentioned first predetermined time. This time-based activation is needed, for example, in cases where the actuator member is against material whose mechanical properties are such that the mover does not bounce back from the actuator member so that the mover would pass the control limit position as a corollary of bouncing back.

In an electric percussion device according to an exemplifying and non-limiting embodiment, the controller is configured to activate the linear electric machine to generate a magnetic force tending to move the mover in a second direction away from the actuator member in response to a situation in which the mover moves in the second direction and the mover passes the control limit position. As the linear electric machine is controlled to generate the magnetic force tending to move the mover away from the actuator member, i.e. in the second direction, after the mover has bounced back from the actuator member and has passed the control limit position, back-and-forth oscillations of the mover can be avoided or at least reduced. Therefore, a time needed between successive impacts directed to the actuator member can be reduced and thereby a stroke frequency of the electric percussion device can be increased.

In an electric percussion device according to an exemplifying and non-limiting embodiment, the sensor system is configured to detect situations in which the mover passes a safety limit position being farther in the first direction than the control limit position, and the controller is configured to prevent activation of the linear electric machine in response to a situation in which the mover has passed the safety limit position when moving towards the actuator member. Passing the safety limit position may mean that there is no material against the actuator member or properties of material against the actuator member are not suitable for producing a sufficient counter force to the actuator member, and thus the mover is advantageously prevented from directing more impacts to the actuator member.

In accordance with the invention, there is also provided a new method for controlling an electric percussion device that comprises:
- a frame attachable to a working machine, the frame comprising attachment members configured to attach to the working machine so that the frame is nondestructively detachable from the working machine,
- an actuator member linearly movably supported with respect to the frame,
- a linear electric machine comprising a mover configured to direct impacts to the actuator member and a stator attached to the frame and provided with windings configured to generate a magnetic force directed to the mover in response to electric current supplied to the windings, and
- a sensor system configured to detect situations in which the mover passes a control limit position with respect to the frame.

The method according to the invention comprises controlling the linear electric machine to decrease the magnetic force directed to the mover in response to a situation in which a first predetermined time has elapsed after the mover has passed the control limit position when moving in a first direction towards the actuator member.

Furthermore, the method comprises activating the linear electric machine to generate the force tending to move the mover in a second direction away from the actuator member in response to a situation in which a second predetermined time has elapsed after the mover passed the control limit position when moving in the first direction, the second predetermined time being longer than the first predetermined time.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of un-recited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of the drawings

Exemplifying and non-limiting embodiments and their advantages are explained in greater detail below in the sense of examples and with reference to the accompanying drawings, in which:
figures 1a, 1b, 1c, and 1d illustrate an electric percussion device according to an exemplifying and non-limiting embodiment, and
figure 2 shows a flowchart of a method according to an exemplifying and non-limiting embodiment for controlling an electric percussion device.

### Description of exemplifying and non-limiting embodiments

The invention and the embodiments thereof are not limited to the exemplifying and non-limiting embodiments described below. Thus, the specific examples provided in the description given below should not be construed as limiting the scope and/or the applicability of the appended claims. Lists and groups of examples provided in the description given below are not exhaustive unless otherwise explicitly stated.

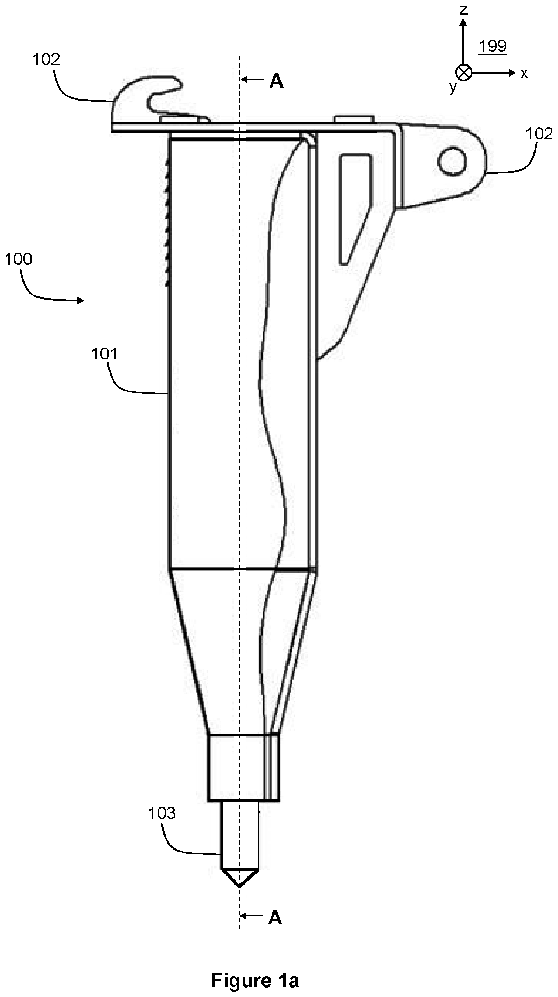

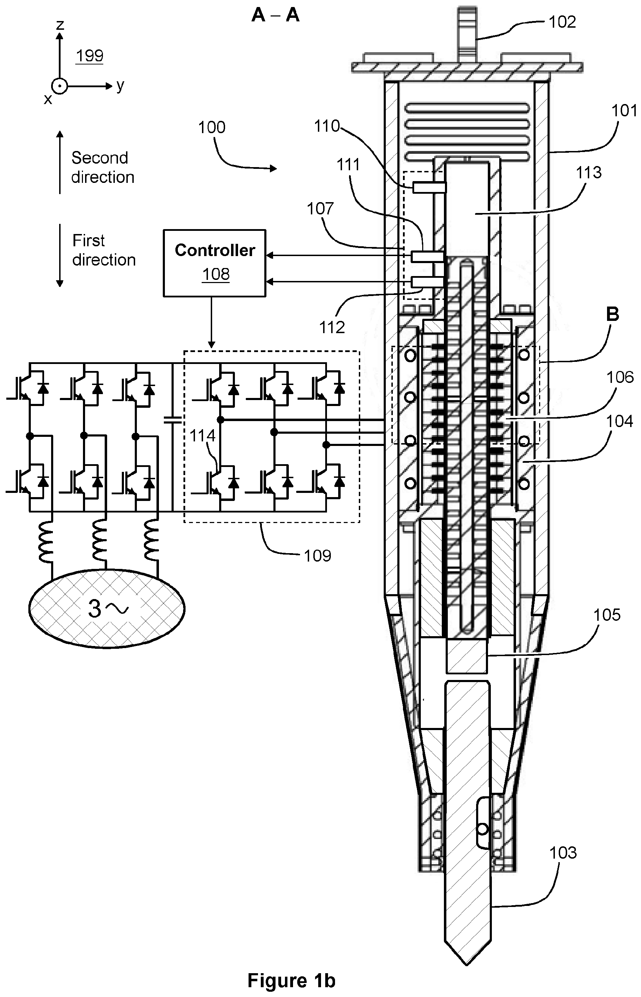

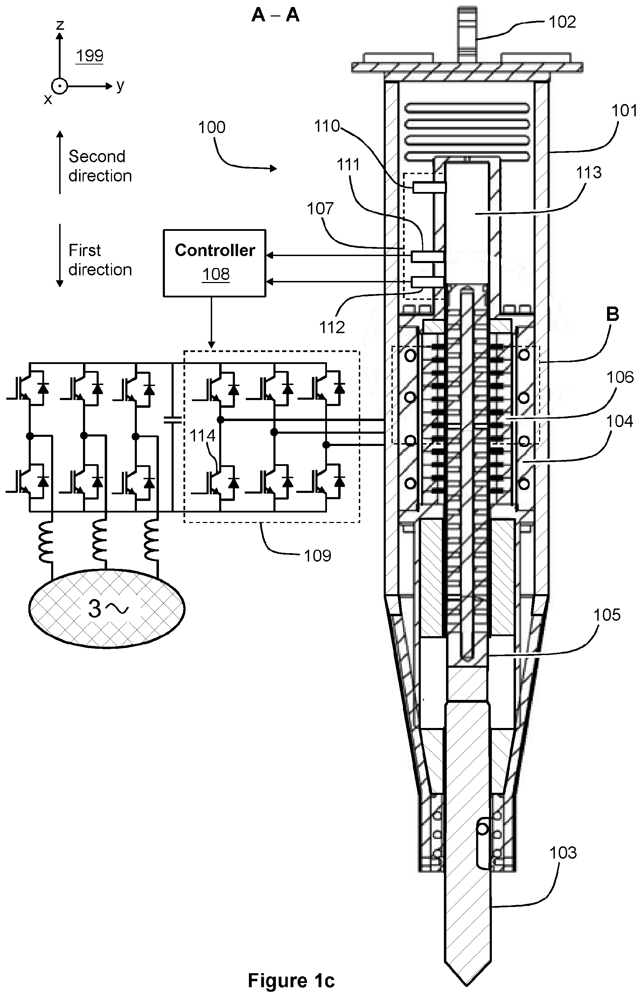

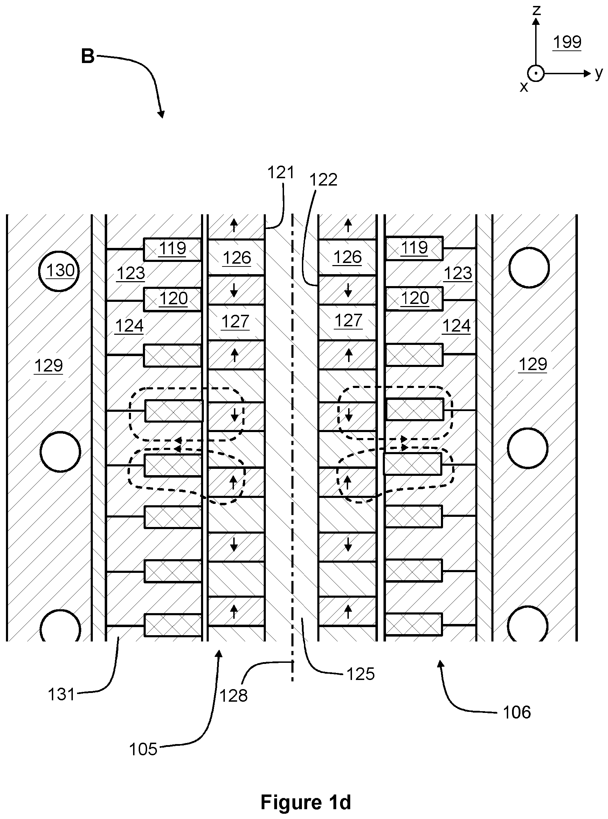

Figure 1a shows an electric percussion device 100 according to an exemplifying and non-limiting embodiment. Figures 1b and 1c show section views taken along a line A-A shown in Figure 1a in two different situations. The geometric section plane is parallel with the yz-plane of a coordinate system 199. Figure 1d shows a magnification of a part B of figures 1b and 1c. The electric percussion device 100 comprises a frame 101 attachable to a working machine, e.g. such as to the boom of an excavator in place of a bucket. The frame 101 comprises attachment members 102 for attaching to the working machine so that the frame 101 is nondestructively detachable from the working machine. The electric percussion device 100 comprises an actuator member 103, e.g. a chisel, linearly movably supported with respect to the frame 101. An end of the actuator member 103 is shaped to constitute a tip for breaking material e.g. stone or concrete.

The electric percussion device 100 comprises a linear electric machine 104 having a mover 105 and a stator 106. The stator 106 is attached to the frame 101 and provided with windings configured to generate a magnetic force directed to the mover 103 in response to electric currents supplied to the windings. The mover 105 is configured to direct impacts to the actuator member 103 in the first direction, i.e. in the negative z-direction of the coordinate system 199.The windings of the stator 106 may constitute for example a multi-phase winding, e.g. a two- or three-phase winding. In the exemplifying electric percussion device 100 illustrated in figures 1a-1d, the linear electric machine 104 is a tubular linear electric machine in which conductor coils of the windings are configured to surround the mover 105. Figures 1b, 1c, and 1d show cross-sectional views of the conductor coils of the windings. In figures 1b and 1c, the cross-sections of the conductor coils are depicted by black rectangular patterns. In figure 1d, two of the conductor coils of the windings are denoted with references 119 and 120. The mover 105 can be, for example, substantially rotationally symmetric with respect to a geometric line 128 shown in figure 1d.

The electric percussion device 100 comprises a sensor system 107 configured to detect situations in which the mover 105 passes a control limit position with respect to the frame 101. Figure 1b shows a situation in which the mover 105 is in the control limit position with respect to the frame 101. In the exemplifying electric percussion device 100 illustrated in figures 1a-1d, the sensor system 107 comprises a first inductive sensor 111 configured to detect situations in which the mover 105 passes the control limit position. It is however also possible that the sensor system 107 comprises some other sensor for detecting situations in which the mover 105 passes the control limit position, e.g. a capacitive, optical, or mechanical sensor. It is to be noted that it is possible to define a reference point in the mover 105 in different ways. For example, in figure 1b, the reference point of the mover 105 is the upper end of the mover and the first inductive sensor 111 detects a situation in which the upper end of the mover passes the first inductive sensor 111. It is however also possible that a different point of the mover is acting as the reference point. For example, the lower part of the mover may have a recession or the like and a sensor located in the lower part of the stator can be configured to detect a situation in which the recession passes the sensor.

The electric percussion device 100 comprises a controller 108 configured to control the linear electric machine 104 to decrease a magnetic force directed to the mover 105 in response to a situation in which a first predetermined time has elapsed after the mover 105 has passed the above-mentioned control limit position when moving in a first direction towards the actuator member 103 i.e. when moving in the negative z-direction of the coordinate system 199. Depending on the control limit position, the first predetermined time can be zero or a time that is shorter than a time that is needed by the mover 105 to move from the control limit position to a position at which the mover 105 hits the actuator member 103. The linear electric machine 104 can be controlled to decrease the magnetic force directed to the mover 105 for example by deactivating the linear electric machine 104 or by limiting stator currents of the linear electric machine. As the linear electric machine is controlled to decrease the magnetic force prior to the mover 105 impacts the actuator member 103 and thereby the speed of the mover may change rapidly, unwanted transient peaks in the stator currents can be avoided.

In an electric percussion device according to an exemplifying and non-limiting embodiment, the controller 108 is configured to deactivate the linear electric machine 104 in order to decrease the magnetic force in response to the above-mentioned situation in which the first predetermined time has elapsed after the mover 105 has passed the above-mentioned control limit position when moving in the first direction towards the actuator member 103 i.e. when moving in the negative z-direction of the coordinate system 199. In an electric percussion device according to an exemplifying and non-limiting embodiment, the controller 108 is configured to deactivate the linear electric machine 104 so that controllable power electronic switches of a supply inverter 109 of the linear electric machine 104 are set into a unidirectionally conductive state. In figures 1b and 1c, one of the controllable power electronic switches of the supply inverter 109 is denoted with a reference 114. In the unidirectionally conductive state, each controllable power electronic switch conducts current only in the forward direction of a diode of the controllable power electronic switch. The diode can be a separate component connected antiparallel with a controllable element of a controllable power electronic switch, or the diode can be a parasitic component formed by semiconductor materials of the controllable element. The controllable element can be for example an insulated gate bipolar transistor "IGBT", a gate-off thyristor "GTO", or some other suitable element that can be switched on and off. When the controllable power electronic switches of the supply inverter 109 are set to the unidirectionally conductive state, magnetic energy stored by the windings of the stator 106 is discharged via the diodes of the controllable power electronic switches. Thus, no inductive current is broken abruptly, and no over-voltages occur.

In an electric percussion device according to an exemplifying and non-limiting embodiment, the controller 108 is configured to activate the linear electric 104 machine to generate a magnetic force tending to move the mover 105 in a second direction away from the actuator member, i.e. in the positive z-direction of the coordinate system 199, in response to a situation in which the mover 105 passes the above-mentioned control limit position when moving in the second direction i.e. in the positive z-direction of the coordinate system 199. As the linear electric machine 104 is controlled to generate the magnetic force tending to move the mover 105 away from the actuator member 103 after the mover 105 has bounced back from the actuator member 103 and has passed the control limit position, back-and-forth oscillations of the mover 105 can be avoided or at least reduced. Therefore, a time needed between successive impacts directed by the mover 105 to the actuator member 103 can be reduced and thereby a stroke frequency of the electric percussion device 100 can be increased.

In an electric percussion device according to an exemplifying and non-limiting embodiment, the controller 108 is further configured to activate the linear electric machine 104 to generate a magnetic force tending to move the mover 105 away from the actuator member 103 in response to a situation in which a second predetermined time has elapsed after the mover 105 has passed the above-mentioned control limit position when moving towards the actuator member 103. The second predetermined time is longer than the above-mentioned first predetermined time. This time-based activation is needed for example in cases where the actuator member 103 is against material whose mechanical properties are such that the mover 105 does not bounce back from the actuator member so that the mover 105 would pass the control limit position as a corollary of bouncing back.

In an electric percussion device according to an exemplifying and non-limiting embodiment, the sensor system 107 is configured to detect situations in which the mover 105 passes a safety limit position that is farther in the first direction, i.e. in the negative z-direction of the coordinate system 199, than the above-mentioned control limit position. Figure 1c shows a situation in which the mover 105 is in the safety limit position with respect to the frame 101. In the exemplifying electric percussion device 100 illustrated in figures 1a-1d, the sensor system 107 comprises a second inductive sensor 112 configured to detect situations in which the mover 105 passes the safety limit position. It is however also possible that the sensor system 107 comprises some other sensor for detecting situations in which the mover 105 passes the safety limit position, e.g. a capacitive, optical, or mechanical sensor. The controller 108 is configured to prevent activation of the linear electric machine 104 in response to a situation in which the mover 105 has passed the safety limit position when moving towards the actuator member 103. Passing the safety limit position may mean that there is no material against the tip of the actuator member 103 or properties of material against the tip of the actuator member 103 are not suitable for producing a sufficient counter force to the actuator member 103. To avoid possible damages in situations of the kind mentioned above, the mover 105 is advantageously prevented from directing more impacts to the actuator member 103.

In an electric percussion device according to an exemplifying and non-limiting embodiment, the sensor system 107 is configured to detect situations in which the mover 105 passes an upper limit position that is farther in the second direction, i.e. in the positive z-direction of the coordinate system 199, than the above-mentioned control limit position. In the exemplifying electric percussion device 100 illustrated in figures 1a-1d, the sensor system 107 comprises a third inductive sensor 110 configured to detect situations in which the mover 105 passes the upper limit position. It is however also possible that the sensor system 107 comprises some other sensor for detecting situations in which the mover 105 passes the upper limit position, e.g. a capacitive, optical, or mechanical sensor. The controller 108 is configured to deactivate the linear electric machine 104 in response to a situation in which the mover 105 passes the upper limit position when moving in the second direction away from the actuator member 103 i.e. when moving in the positive z-direction of the coordinate system 199. The controller 108 is configured to activate the linear electric 104 machine to generate a magnetic force tending to move the mover 105 in the first direction towards the actuator member 103, i.e. in the negative z-direction of the coordinate system 199, in response to a situation in which the mover 105 passes the above-mentioned upper limit position when moving in the first direction i.e. in the negative z-direction of the coordinate system 199. The mover 105 can be returned from its extreme position in the positive z-direction of the coordinate system 199 by e.g. gas pressure formed in a room 113. It is also possible that the sensor 111 and/or the sensor 112 is/are configured to detect situations in which the mover 105 passes the upper limit position and thus here is no need for the sensor 110. It is to be noted that electric percussion devices according to exemplifying and non-limiting embodiments may have different arrangements for controlling operation of the mover 105 in and near to its extreme position in the positive z-direction of the coordinate system 199.

Implementation of the controller 108 shown in figures 1b and 1c can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the controller 108 may comprise one or more memory circuits each of which can be for example a Random-Access Memory "RAM" circuit.

In the exemplifying electric percussion device 100 illustrated in figures 1a-1d, the mover 105 comprises annular permanent magnets provided one after another in the longitudinal direction of the mover 105, i.e. in the direction of the z-axis of the coordinate system 199. The axial direction of the annular shape of each permanent magnet coincides with the longitudinal direction of the mover 105. In figure 1d, two of the annular permanent magnets are denoted with references 121 and 122. The magnetizing directions of the permanent magnets coincide with the longitudinal direction of the mover 105, and the magnetizing directions of successive permanent magnets are opposite to each other. The magnetizing directions of the permanent magnets are indicated with arrows in figure 1d. Exemplifying magnetic flux lines are depicted with dashed lines. In this exemplifying case, the mover 105 comprises a center rod 125 and annular ferromagnetic elements provided around the center rod 125 to form a ferromagnetic core structure of the mover 105. In figure 1d, two of the annular ferromagnetic elements of the mover 105 are denoted with references 126 and 127. As shown in figure 1d, each annular permanent magnet is situated between two successive annular ferromagnetic elements. Advantageously, the center rod 125 of the mover 105 is made of non-ferromagnetic material in order to maximize a magnetic coupling between the permanent magnets and the windings of the stator 106, i.e. to minimize a leakage flux via the center rod 125.

In the exemplifying electric percussion device 100 illustrated in figures 1a-1d, a ferromagnetic core structure 131 of the stator 106 comprises annular ferromagnetic elements which surround the mover 105 and which are stacked one after another in the longitudinal direction of the mover 105 and form slots for conductor coils of the stator windings. In figure 1d, two of the annular ferromagnetic elements of the stator 106 are denoted with references 123 and 124. An exemplifying way of implementing the windings of the stator 106 is such that each slot is provided with only one conductor coil belonging to one phase of the windings. It is also possible to provide each slot, for example, with two conductor coils belonging either to a same phase of the windings or to two different phases of the windings. The stator 106 comprises also a stator frame 129 having cooling channels for conducting cooling fluid, e.g. water or air. In figure 1d, one of the cooling channels is denoted with a reference 130.

It is to be noted that electric percussion devices according to exemplifying and non-limiting embodiments may have different ferromagnetic core structures of the mover and/or different ferromagnetic core structures of the stator, and thus electric percussion devices according to exemplifying and non-limiting embodiments are not limited to any specific ferromagnetic core structures of the mover and/or the stator.

Furthermore, it is to be noted that electric percussion devices according to embodiments of the invention are not limited to any specific type of a linear electric machine. For example, the linear electric machine of an electric percussion device according to an exemplifying and non-limiting embodiment can be a flux switching permanent magnet synchronous machine "FSPMSM" where permanent magnets are located in a stator. It is also possible that an electric percussion device according to an exemplifying and non-limiting embodiment comprises a reluctance linear electric machine or a linear induction machine in which no permanent magnets are needed. In a reluctance linear electric machine, all magnetic flux is produced by electric currents and a magnetic force directed to the mover is generated by reluctance variation based on the design of the mover. Correspondingly, in a linear induction machine, all magnetic flux is produced by electric currents and a magnetic force directed to the mover is generated by currents induced in the mover.

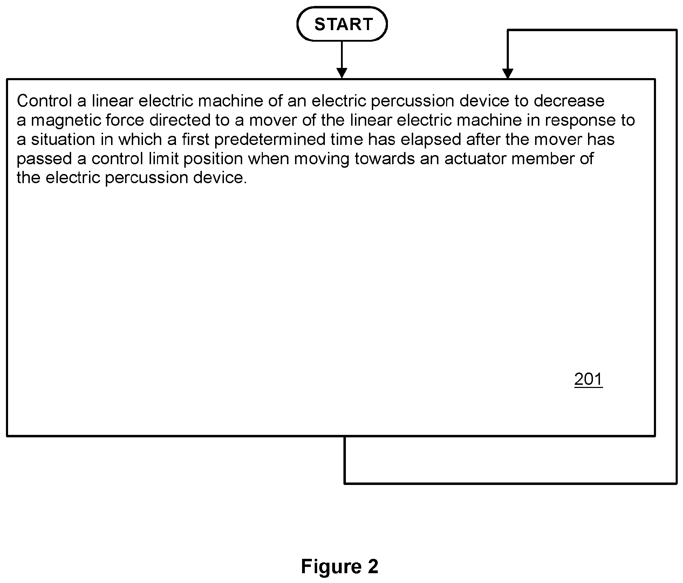

Figure 2 shows a flowchart of a method according to an exemplifying and non-limiting embodiment for controlling an electric percussion device that comprises:
- a frame attachable to a working machine, the frame comprising attachment members configured to attach to the working machine so that the frame is nondestructively detachable from the working machine,
- an actuator member linearly movably supported with respect to the frame,
- a linear electric machine comprising a mover configured to direct impacts to the actuator member and a stator attached to the frame and provided with windings configured to generate a magnetic force directed to the mover in response to electric current supplied to the windings, and
- a sensor system configured to detect situations in which the mover passes a control limit position with respect to the frame.

The method comprises the following action:
- action 201: controlling the linear electric machine to decrease the magnetic force directed to the mover in response to a situation in which a first predetermined time has elapsed after the mover has passed the control limit position when moving in a first direction towards the actuator member.

A method according to an exemplifying and non-limiting embodiment comprises activating the linear electric machine to generate a magnetic force tending to move the mover in a second direction away from the actuator member in response to a situation in which the mover moves in the second direction and the mover passes the control limit position.

A method according to an exemplifying and non-limiting embodiment comprises deactivating the linear electric machine in order to decrease the magnetic force in response to the situation in which the first predetermined time has elapsed after the mover has passed the control limit position when moving in the first direction towards the actuator member.

A method according to an exemplifying and non-limiting embodiment comprises setting controllable power electronic switches of a supply inverter of the linear electric machine into a unidirectionally conductive state in order to deactivate the linear electric machine.

A method according to an exemplifying and non-limiting embodiment comprises activating the linear electric machine to generate the force tending to move the mover in the second direction away from the actuator member in response to a situation in which a second predetermined time has elapsed after the mover passed the control limit position when moving in the first direction, the second predetermined time being longer than the first predetermined time.

In a method according to an exemplifying and non-limiting embodiment, the sensor system comprises a first inductive sensor configured to detect the situation in which the mover passes the control limit position.

In a method according to an exemplifying and non-limiting embodiment, the sensor system is configured to detect situations in which the mover passes a safety limit position that is farther in the first direction than the control limit position, and the method comprises preventing activation of the linear electric machine in response to a situation in which the mover has passed the safety limit position in the first direction.

In a method according to an exemplifying and non-limiting embodiment, the sensor system comprises a second inductive sensor configured to detect the situation in which the mover passes the safety limit position.

In a method according to an exemplifying and non-limiting embodiment, the linear electric machine is a tubular linear electric machine in which conductor coils of the windings are configured to surround the mover.

In a method according to an exemplifying and non-limiting embodiment, the mover comprises annular permanent magnets provided one after another in the longitudinal direction of the mover, wherein the axial direction of an annular shape of each of the annular permanent magnets coincides with the longitudinal direction of the mover, and magnetizing directions of the annular permanent magnets coincide with the longitudinal direction of the mover so that the magnetizing directions of successive ones of the annular permanent magnets are opposite to each other.

In a method according to an exemplifying and non-limiting embodiment, a ferromagnetic core structure of the stator comprises annular ferromagnetic elements successive in a longitudinal direction, surrounding the mover, and forming slots for conductor coils of the windings.

In a method according to an exemplifying and non-limiting embodiment, the mover comprises a center rod made of non-ferromagnetic material and annular ferromagnetic elements around the center rod and forming a ferromagnetic core structure of the mover.

The invention and the embodiments thereof are not limited to the exemplifying and non-limiting embodiments described above. Thus, the specific examples provided in the description given above should not be construed as limiting the scope and/or the applicability of the appended claims. Lists and groups of examples provided in the description given above are not exhaustive unless otherwise explicitly stated.

## Claims

1. An electric percussion device (100) comprising:
- a frame (101) attachable to a working machine, the frame comprising attachment members (102) configured to attach to the working machine so that the frame is nondestructively detachable from the working machine,
- an actuator member (103) linearly movably supported with respect to the frame (102),
- a linear electric machine (104) comprising a mover (105) configured to direct impacts to the actuator member (103), and a stator (106) attached to the frame (102) and provided with windings configured to generate a magnetic force directed to the mover (105) in response to electric current supplied to the windings,
- a sensor system (107) configured to detect situations in which the mover passes a control limit position with respect to the frame, and
- a controller (108) configured to control the linear electric machine to decrease the magnetic force directed to the mover (105) of the linear electric machine (104) in response to a situation in which a first predetermined time has elapsed after the mover (105) has passed the control limit position when moving in a first direction (-z) towards the actuator member (103),
**characterized in that** the controller is configured to activate the linear electric machine to generate the magnetic force tending to move the mover in a second direction (+z) away from the actuator member in response to a situation in which a second predetermined time has elapsed after the mover passed the control limit position when moving in the first direction, the second predetermined time being longer than the first predetermined time.

2. An electric percussion device according to claim 1, wherein the controller (108) is configured to activate the linear electric machine (104) to generate a magnetic force tending to move the mover (105) in the second direction (+z) away from the actuator member in response to a situation in which the mover (105) moves in the second direction and the mover (105) passes the control limit position.

3. An electric percussion device according to claim 1 or 2, wherein the controller (108) is configured to deactivate the linear electric machine (104) in order to decrease the magnetic force in response to the situation in which the first predetermined time has elapsed after the mover (105) has passed the control limit position when moving in the first direction (-z) towards the actuator member (103).

4. An electric percussion device according to claim 3, wherein the controller (108) is configured to set controllable power electronic switches of a supply inverter of the linear electric machine into a unidirectionally conductive state in order to deactivate the linear electric machine.

5. An electric percussion device according to any one of claims 1-4, wherein the sensor system (107) comprises a first inductive sensor (111) configured to detect the situation in which the mover passes the control limit position.

6. An electric percussion device according to any one of claims 1-5, wherein the sensor system (107) is configured to detect situations in which the mover passes a safety limit position being farther in the first direction than the control limit position, and the controller is configured to prevent activation of the linear electric machine in response to a situation in which the mover has passed the safety limit position when moving in the first direction.

7. An electric percussion device according to claim 6, wherein the sensor system comprises a second inductive sensor (112) configured to detect the situation in which the mover passes the safety limit position.

8. An electric percussion device according to any one of claims 1-7, wherein the linear electric machine (104) is a tubular linear electric machine in which conductor coils (119, 120) of the windings are configured to surround the mover (105).

9. A method for controlling an electric percussion device (100) that comprises:
- a frame (101) attachable to a working machine, the frame comprising attachment members (102) configured to attach to the working machine so that the frame is nondestructively detachable from the working machine,
- an actuator member (103) linearly movably supported with respect to the frame,
- a linear electric machine (104) comprising a mover (105) configured to direct impacts to the actuator member and a stator (106) attached to the frame and provided with windings configured to generate a magnetic force directed to the mover in response to electric current supplied to the windings, and
- a sensor system (107) configured to detect situations in which the mover passes a control limit position with respect to the frame,
wherein the method comprises controlling (201) the linear electric machine to decrease the magnetic force directed to the mover in response to a situation in which a first predetermined time has elapsed after the mover has passed the control limit position when moving in a first direction (-z) towards the actuator member, **characterized in that** the method comprises activating the linear electric machine to generate the force tending to move the mover in a second direction (+z) away from the actuator member in response to a situation in which a second predetermined time has elapsed after the mover passed the control limit position when moving in the first direction, the second predetermined time being longer than the first predetermined time.

10. A method according to claim 9, wherein the method comprises activating the linear electric machine to generate a magnetic force tending to move the mover in the second direction (+z) away from the actuator member in response to a situation in which the mover moves in the second direction and the mover passes the control limit position.

11. A method according to claim 9 or 10, wherein the method comprises deactivating the linear electric machine in order to decrease the magnetic force in response to the situation in which the first predetermined time has elapsed after the mover has passed the control limit position when moving in the first direction (-z) towards the actuator member.

12. A method according to claim 11, wherein the method comprises setting controllable power electronic switches of a supply inverter of the linear electric machine into a unidirectionally conductive state in order to deactivate the linear electric machine.

13. A method according to any one of claims 9-12, wherein the sensor system is configured to detect situations in which the mover passes a safety limit position being farther in the first direction than the control limit position, and the method comprises preventing activation of the linear electric machine in response to a situation in which the mover has passed the safety limit position when moving in the first direction.
